# EUROPEAN PATENT APPLICATION

(11) **EP 4 632 928 A1**
(43) Date of publication of application: **15.10.2025**
(21) Application number: 23932797.6
(22) Date of filing: 22.11.2023
(51) Int. Cl.: H01M 50/40, H01M 50/403, H01M 50/409, H01M 50/489

(54) **SEPARATOR FILM AND PREPARATION METHOD THEREFOR, BATTERY, AND ELECTRIC DEVICE**

(30) Priority: 11.04.2023 CN 202310385807
(71) Applicant: Contemporary Amperex Technology Co., Limited, Ningde, Fujian 352100 (CN)
(72) Inventor: LI, Quan, Ningde, Fujian 352100 (CN); YANG, Jianrui, Ningde, Fujian 352100 (CN); SUN, Chengdong, Ningde, Fujian 352100 (CN); OUYANG, Chuying, Ningde, Fujian 352100 (CN); HUANG, Siying, Ningde, Fujian 352100 (CN); WANG, Yaohui, Ningde, Fujian 352100 (CN)
(74) Representative: Kraus & Lederer PartGmbB
(86) International application number: PCT/CN2023/133380
(87) International publication number: WO 2024/212526

(57) **Abstract**

The present application discloses a separator film and a preparation method therefor, a battery, and an electric device. The separator film comprises a polymer base film and an organic binder dispersed in the polymer base film, and the tail end of the molecular chain of part of the organic binder is exposed out of the surface of the polymer base film. According to the present application, an organic binder is dispersed in a polymer base film material to form a self-adhesive separator film, and the mechanical strength of the polymer base film can be enhanced by using the binding property of the organic binder in the polymer base film material, thereby improving the overall heat resistance and stability of the separator film; additionally, when the organic binder is dispersed in the polymer base film material, the separator film has a smaller thickness than when the organic binder is sprayed on the surface, so that the energy density and the cycle life of the battery can be further improved.

## Description

The present application claims priority to the Chinese Patent Application No. 202310385807.0, entitled "SEPARATOR AND PREPARATION METHOD THEREFOR, BATTERY, AND ELECTRIC DEVICE" filed by the China Patent Office on April 11, 2023, which is incorporated herein by reference in its entirety.

### TECHNICAL FIELD

The present application belongs to the technical field of battery materials, and particularly relates to a separator and a preparation method therefor, a battery, and an electric device.

### BACKGROUND

A battery separator film (BSF), also called a battery separator, is one of the core materials in a battery. The separator is located between a positive electrode and a negative electrode of the battery, and mainly has the functions of separating a positive electrode active substance from a negative electrode active substance of the battery to prevent a short circuit caused by contact of the two electrodes, while allowing current-carrying ions in an electrolytic solution to pass through to form a charge-discharge loop, thereby having a great influence on the safety and costs of the battery.

In order to improve the dynamics performance of the battery, a polymer binding layer is generally sprayed on a surface of a base film of the separator to enhance the adhesion between the separator and an electrode plate; however, this type of separator has poor and unstable heat resistance, and the preparation process is complex, consequently causing high costs.

### SUMMARY

In view of the above problems, the present application provides a separator and a preparation method therefor, a battery, and an electric device, and aims to solve the technical problem of how to improve the overall performance of the separator at low costs.

In a first aspect, embodiments of the present application provide a separator, including a polymer base film and an organic binder dispersed in the polymer base film, where molecular chain ends of a part of the organic binder are exposed on a surface of the polymer base film.

The organic binder is dispersed in a material of the polymer base film to form a self-adhesive separator, and compared with a manner of spraying on a surface of a polymer base film, the separator according to the embodiments of the present application can enhance, based on the cohesiveness of the organic binder in the material of the polymer base film, the mechanical strength of the polymer base film, and the organic binder in the separator is not prone to fall off, so that the overall heat resistance and stability of the separator can be improved; meanwhile, since the organic binder is dispersed in the material of the polymer base film, compared with the manner of spraying on the surface of the polymer base film, the separator has a smaller thickness and is more convenient to use, and therefore when the separator is used in a battery, the energy density of the battery can be further improved and the cycle life of the battery can be further prolonged.

In some embodiments, a substrate of the polymer base film includes at least one of a polyolefin type material, a fluoropolymer type material, a polyester type material, polyetheretherketone, polyimide, cellulose, and a cellulose ester.

Using at least one of the polyolefin type material, the fluoropolymer type material, the polyester type material, the polyetheretherketone, the polyimide, the cellulose, and the cellulose ester as a main polymer material of a substrate of the separator not only ensures a good insulation property, but also facilitates forming a microporous structure, which can make the separator have the air permeability and porosity required in the industry, thereby providing a good migration channel for ions of an electrolytic solution and ensuring stable and efficient operation of the battery.

In some embodiments, the polyolefin type material includes at least one of polyethylene (PE) and polypropylene (PP); alternatively,
the fluoropolymer type material includes at least one of polytetrafluoroethylene (PTFE), polyvinyl fluoride (PVF), and polyvinylidene fluoride (PVDF); alternatively,
the polyester type material includes at least one of polyethylene terephthalate and polyurethane.

PE and PP have the characteristics of low price, excellent mechanical properties, and high electrochemical stability, and are thus widely used commercially. PTFE, PVF, and PVDF have good polarity and dielectric constant, so that the lyophilic property of the separator can be well improved. Polyethylene terephthalate has good resistance to electrolytic solution corrosion, and polyurethane has good wear resistance.

In some embodiments, the organic binder includes at least one of PVDF, polyacrylate, an acrylic acid, carboxymethyl cellulose, polyimide, an ethylene-vinyl acetate copolymer, polyurethane, maleic anhydride, and an ethylene-acrylic acid copolymer.

A material of the organic binder in the above type has good cohesiveness and can be dispersed in the material of the polymer base film to form the self-adhesive separator.

In some embodiments, the organic binder has a molecular weight of 100 Da to 1,200,000 Da, and the substrate of the polymer base film has a molecular weight of 50,000 Da to 4,000,000 Da.

The organic binder with the molecular weight of 100 Da to 1,200,000 Da has good cohesiveness, and the substrate of the polymer base film with the molecular weight of 50,000 Da to 4,000,000 Da has good mechanical strength.

In some embodiments, the organic binder has a molecular weight of 1,000 Da to 1,000,000 Da, and the substrate of the polymer base film has a molecular weight of 300,000 Da to 2,000,000 Da.

The organic binder with the molecular weight of 1,000 Da to 1,000,000 Da can be well dispersed in the polymer base film with the molecular weight of 300,000 Da to 2,000,000 Da, so that the cohesiveness of the organic binder can be well exerted, and meanwhile, the organic binder is not prone to fall off, which can further improve the overall heat resistance and stability of the separator.

In some embodiments, the organic binder is different from the substrate of the polymer base film in type; alternatively,
the organic binder is the same as a polymerization monomer of the polymer base film, and the molecular weight of the organic binder is less than the molecular weight of the substrate of the polymer base film.

On the one hand, if the organic binder is different from the substrate of the polymer base film in type, when the organic binder is dispersed in the polymer base film, the separator has better overall heat resistance. On the other hand, if the organic binder is the same as the polymerization monomer of the polymer base film in type, the organic binder and the substrate have good compatibility, and meanwhile, the molecular weight of the organic binder is less than that of the substrate of the polymer base film, so that the cohesiveness of the organic binder and the mechanical strength of the polymer base film can be maintained. The organic binder and the substrate are matched to form the self-adhesive separator with better compatibility, and the organic binder is uniformly dispersed in the substrate, so that the separator has a good thermal pore-closing function, thereby reducing a thermal runaway risk, which can further improve the safety of the separator.

In some embodiments, the organic binder is the same as thepolymerization monomer of the polymer base film, the organic binder includes PVDF with a molecular weight of 300,000 Da to 1,000,000 Da, and the substrate of the polymer base film includes PVDF with a molecular weight of 1,000,000 Da to 2,000,000 Da.

The above PVDF with different molecular weights is matched to form the organic binder and the substrate of the polymer base film, and a separator material formed by the matched materials has good compatibility.

In an embodiment, the organic binder includes PVDF with a molecular weight of 400,000 Da to 750,000 Da, and the substrate of the polymer base film includes PVDF with a molecular weight of 1,200,000 Da to 1,700,000 Da.

A separator material formed by the matched materials has a better comprehensive effect of the cohesiveness and the compatibility.

In some embodiments, a mass ratio of the polymer base film to the organic binder is 10:(0.01-6).

According to the mass ratio of the polymer base film to the organic binder of 10:(0.01-6), the organic binder is dispersed in the polymer base film to form the separator, and at the mass ratio, the separator can keep self-adhesion, and meanwhile has better heat resistance and stability.

In some embodiments, a mass ratio of the polymer base film to the organic binder is 10:(0.1-5).

According to the mass ratio of the polymer base film to the organic binder of 10:(0.1-5), the organic binder is dispersed in the polymer base film to form the separator, so that the overall heat resistance and stability of the separator and the comprehensive effect of improving the structural stability of the battery are good.

In some embodiments, the separator has a thickness of 1 µm to 12 µm.

The organic binder is dispersed in the polymer base film to form the separator with the thickness of 1 µm to 12 µm, the separator still has good mechanical strength at the thickness due to the cohesive action of the organic binder, and meanwhile, when being used in a battery, the small-thickness separator can significantly improve the energy density of the battery.

In some embodiments, the separator has a thickness of 3 µm to 6 µm.

The separator with the thickness of 3 µm to 6 µm has a good comprehensive effect of the mechanical strength and the energy density.

In a second aspect, embodiments of the present application provide a preparation method for the above separator, including the following steps:
mixing an organic binder and a substrate of a polymer base film to obtain a mixture; and
melt-extruding the mixture, and then performing stretching treatment to obtain the separator.

By using a dry-stretching pore-forming technology, the organic binder and the substrate of the polymer base film are mixed, melt-extruded, and stretched such that the separator with a microporous structure can be obtained; the preparation method for integrating the organic binder and the substrate to form the film is simple in process and low in preparation costs, and can also be used for preparing a self-adhesive separator with good heat resistance and stability, thereby improving the energy density of the battery and prolonging the cycle life of the battery.

In some embodiments, a temperature of the melt-extruding is 200-300 °C.

The temperature of 200-300 °C can cause the mixture of the organic binder and the substrate of the polymer base film to form a viscous-state mixture which is uniformly mixed and has good fluidity, so that subsequent stretching and film forming can be facilitated.

In some embodiments, a temperature of the stretching treatment is 100-120 °C.

The temperature of the melt-extruded material at 200-300 °C is lowered to 100-120 °C for the stretching treatment, and stretching at the temperature may cause a crystalline interface of the molten material to peel off, thereby forming the separator with a porous structure.

In some embodiments, the stretching treatment has a stretching ratio of 10-300 times.

The melt-extruded material in the viscous state is stretched at the stretching ratio of 10-300 times, so that the separator with the microporous structure can be formed.

In some embodiments, the stretching treatment includes biaxial stretching with a stretching ratio of 100-200 times.

Performing biaxial stretching at the stretching ratio of 100-200 times can well control the porosity of the separator, and meanwhile makes pores uniformly distributed.

In a third aspect, embodiments of the present application provide a battery, including a positive electrode plate, a negative electrode plate, and a separator arranged between the positive electrode plate and the negative electrode plate, where the separator is the separator according to the first aspect of the embodiments of the present application and/or the separator prepared by the preparation method according to the second aspect of the embodiments of the present application.

The separator according to the first aspect of the embodiments of the present application and/or the separator prepared by the preparation method according to the second aspect of the embodiments of the present application are used in the battery, such that the positive electrode plate and the negative electrode plate of the battery can be bound together by the separator, and therefore the space activity of the electrode plate of the battery is reduced, and a distance between positive and negative electrodes is shortened, thereby enabling the battery to have a good energy density and long cycle life based on the fact that the separator is good in overall heat resistance and stability and small in thickness.

In some embodiments, an adhesive force between the separator and the positive electrode plate or the negative electrode plate is greater than or equal to 1.0 N/m under hot-pressing conditions of 95 °C and 7 MPa for 10 s.

The adhesive force between the self-adhesive separator and the positive electrode plate or the negative electrode plate may be greater than or equal to 1.0 N/m due to the high cohesiveness of the self-adhesive separator, and therefore the structure of the battery is stable.

In some embodiments, the battery is a secondary battery.

The secondary battery has the characteristics of a high energy density and long cycle life and can be used as a power battery or a power source of an energy storage system.

In a fourth aspect, embodiments of the present application provide an electric device, including the battery according to the third aspect of the embodiments of the present application.

By using the battery according to the third aspect of the embodiments of the present application, the electric device can be applied in a wide range of environments, is long in service life, and can work for a longer time.

The above description is only an overview of the technical solution of the present application. For a better understanding, the technical means of the present application can be implemented in accordance with the disclosure of the specification. To make the above and other objectives, features, and advantages of the present application clearer and understandable, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural view of a film layer of a separator according to embodiments of the present application;
FIG. 2 is a schematic flowchart of a preparation method for the separator according to the embodiments of the present application;
FIG. 3 is a schematic structural view of an embodiment of a secondary battery according to embodiments of the present application;
FIG. 4 is an exploded view of the secondary battery shown in FIG. 3;
FIG. 5 is a schematic structural view of an embodiment of a battery module according to embodiments of the present application;
FIG. 6 is a schematic structural view of an embodiment of a battery pack according to embodiments of the present application;
FIG. 7 is an exploded view of the battery pack shown in FIG. 6; and
FIG. 8 is a schematic view of an embodiment of an electric device including the battery according to the embodiments of the present application as a power source.

### Description of the reference numerals:

11-polymer base film; 12-organic binder; 20-battery cell; 21-housing; 22-top cover assembly; 23-electrode assembly; 30-battery module; 40-battery pack; 41-upper case body; 42-lower case body.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the claimed scope of the present application.

Unless otherwise defined, all technical and scientific terms used herein have the same meaning as commonly understood by those skilled in the art to which the present application belongs. The terms used herein are only for illustrating the specific embodiments, rather than limiting the present application. The terms "comprise", "include", and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the indicated technical features. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more. Similarly, "plurality of groups" refers to two or more groups, and "plurality of pieces" refers to two or more pieces. "At least one" means more than one (including one, two, three, etc.).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings and are merely for the convenience of describing the embodiments of the present application and simplifying the description, rather than indicating or implying that the noted devices or elements must have specific directions or must be constructed and operated in specific directions. Therefore, these terms should not be construed as limitations on the embodiments of the present application.

In the description of the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments disclosed in the present application can be interpreted according to the specific condition.

In the era pursuing energy conservation and emission reduction, the new energy technology has advanced rapidly, with the battery technology standing out for its research breakthroughs and significant applications. In ion batteries, such as lithium-ion batteries, a battery separator is one of the important components. The separator is a microporous film for separating a positive electrode from a negative electrode, and is a polymer functional material with a nano-scale microporous structure. The separator mainly has the functions of separating a positive electrode active substance from a negative electrode active substance of the battery to reduce the risk of a short circuit caused by contact of the two electrodes, while allowing electrolyte ions to pass through. The performance of the separator determines the interface structure, internal resistance, or the like of the battery, and directly influences the capacity, cycle, and safety performance of the battery. In practical applications, those skilled generally perform modification and functionalization on the separator.

In order to improve the dynamics performance of the battery, a modification scheme for enhancing the cohesiveness between the separator and an electrode plate by spraying an organic binding layer on a surface of the separator is present in the market. However, the organic binding layer sprayed on the surface of the separator has poor heat resistance; because the battery may release heat in the charging and discharging processes, especially when the battery is short-circuited or overcharged, a large amount of heat is released, and when the temperature rises, the low heat resistance of the organic binding layer on the surface of the separator influences the insulation effect of the separator. Simultaneously, the organic binding layer is bonded on the surface of the separator in a manner of a whole layer, which increases the overall thickness of the separator, thereby influencing the energy density of the battery, and the viscosity of the battery is likely to decline after multi-time cyclic charge and discharge of the battery, which causes the organic binding layer to be likely to fall off from the surface of the separator, thereby influencing the bonding stability thereof. In addition, preparing the organic binding layer on the surface of the separator by using a spraying manner makes the operation process complex, which is likely to increase device costs and process flow steps.

Based on the above consideration, in order to overcome the defect caused by spraying the organic binding layer on the surface of the separator, embodiments of the present application design a novel self-adhesive separator, which includes a polymer base film and an organic binder dispersed in the polymer base film. The organic binder is added into a material of the polymer base film to form the self-adhesive separator, and based on the cohesiveness of the organic binder in the material of the polymer base film, the overall heat resistance and stability of the separator can be improved. The separator is simple in film forming process, and when the separator is used in a battery, the energy density of the battery can be remarkably improved and the cycle life of the battery can be remarkably prolonged. Therefore, the following technical solutions are proposed.

### Separator

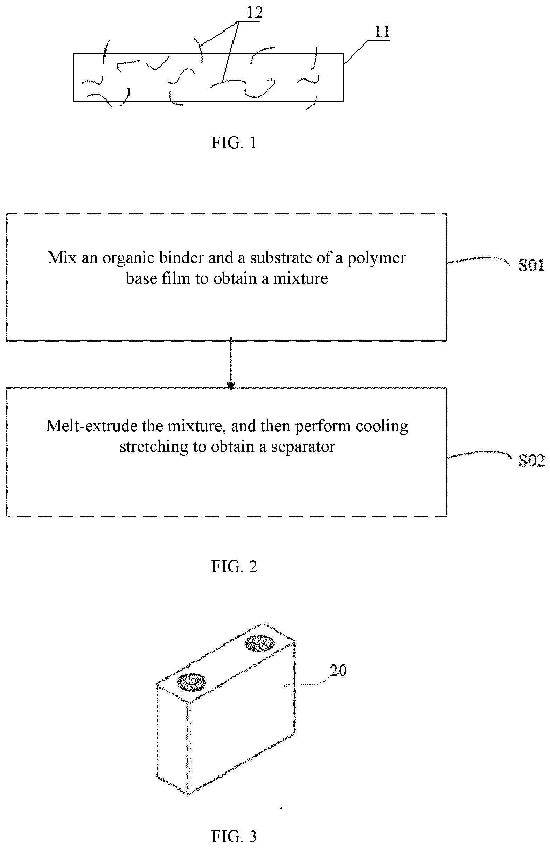

In a first aspect, embodiments of the present application provide a separator, as shown in FIG. 1, including: a polymer base film 11 and an organic binder 12. The organic binder 12 is dispersed in the polymer base film 11, and at the same time, molecular chain ends of a part of the organic binder 12 are exposed on a surface of the polymer base film 11.

The polymer base film 11 may be a base film formed by a polymer substrate of the separator, and a microporous film may be manufactured by using the polymer substrate as a main material of the separator, so as to achieve mechanical properties, electrochemical properties, and the like required by the battery separator.

The organic binder 12 is an organic material auxiliary agent with an adhesive performance, and is used for enhancing the cohesiveness of the separator and an electrode plate so as to improve the dynamics performance of the battery. In the separator of the embodiments of the present application, the organic binder 12 is dispersed in the polymer base film 11 to enhance the mechanical strength of the polymer base film 11, and meanwhile, the molecular chain ends of a part of the organic binder 12 are exposed on the surface of the polymer base film 11 to endow the surface of the polymer base film 11 with cohesiveness, so as to form a self-adhesive separator, where the surface of the polymer base film 11 where the molecular chain ends of the organic binder 12 are exposed include an upper surface and a lower surface opposite to each other, such that the separator can be used for simultaneously adhering to a positive electrode plate and a negative electrode plate in the battery.

In the embodiments of the present application, the organic binder 12 is dispersed in a material of the polymer base film 11 to form the self-adhesive separator, based on the cohesiveness of the organic binder 12 dispersed in the material of the polymer base film 11, the mechanical strength of the polymer base film 11 can be enhanced from the inside of the separator, and the organic binder in the separator is not prone to fall off, so that the separator has good heat resistance and stability. Compared with the current manner of forming a binding layer on the surface of the polymer base film 11 by spraying, the organic binder 12 of the separator according to the embodiments of the present application is dispersed in the polymer base film 12, so that the overall thickness of the separator is smaller, and when the separator is used in a battery, the energy density of the battery can be further improved and the cycle life of the battery can be further prolonged.

In some embodiments, a substrate of the polymer base film 11 in the separator may include at least one of a polyolefin type material, a fluoropolymer type material, a polyester type material, polyetheretherketone, polyimide, cellulose, and a cellulose ester.

A substrate of the separator may generally have good chemical and thermal stability, appropriate porosity and pore size, and good mechanical strength. The polyolefin type material, the fluoropolymer type material, the polyester type material, the polyetheretherketone, the polyimide, the cellulose, and the cellulose ester not only have a good insulation property, but also can form a microporous structure, which can make the separator have the air permeability and porosity required in the industry, thereby providing a good migration channel for ions of an electrolytic solution and ensuring stable and efficient operation of the battery, and therefore, the above materials can be used as a main polymer material of the substrate of the separator.

Specifically, in the separator of the embodiments of the present application, the separator having certain air permeability and porosity may be formed by selecting the types and ratio of the above substrate of the polymer base film 11 and the organic binder 12, so as to be used in a secondary battery.

The Gurley number is selected as a parameter of the air permeability, namely, the time required for gas of a given volume to pass through a separator of a given area under the condition of a given pressure. A test can be performed specifically with reference to the standard GB/T 36363-2018, by testing the time required for 100 cc (cubic centimeter, 1 cc = 1 mL) of air to pass through a separator with an area of 6.45 cm² at a pressure of 1.21 kPa. In an exemplary example, by testing, the air permeability of the separator in the present application may be 100 s/100 cc to 400 s/100 cc, including but not limited to, 100 s/100 cc, 150 s/100 cc, 200 s/100 cc, 250 s/100 cc, 300 s/100 , 320 s/100 , 380 s/100 , 400 s/100 cc, and other typical but non-limiting air permeability. For example, the air permeability of the separator may be 100 s/100 cc to 200 s/100 cc.

The porosity is namely the percentage of the volume of holes inside the separator to the total volume of the separator. Specifically, a test can be performed with reference to the standard GB/T 36363-2018, in an exemplary example, by testing, the porosity of the separator in the present application may be 25% to 80%, including but not limited to, 25%, 30%, 32%, 36%, 38%, 40%, 45%, 46%, 48%, 50%, 52%, 54%, 56%, 58%, 60%, 65%, 68%, 70%, 75%, 78%, 80%, and other typical but not-limiting porosity. For example, the porosity of the separator may be 30% to 35%.

In some embodiments, the substrate of the polymer base film 11 in the separator includes: a polyolefin type material, a fluoropolymer type material, a polyester type material, polyetheretherketone, polyimide, cellulose, and a cellulose ester. (1) The polyolefin type material may include at least one of polyethylene (PE) and polypropylene (PP); PE and PP have the characteristics of low price, excellent mechanical properties, and high electrochemical stability, most of commercialized lithium-ion battery separator products are microporous films prepared from the polyolefin type material, main raw materials are PE and PP with a high molecular weight, and this type of polyolefin materials have the advantages of high strength, good resistance to acid and alkali corrosion, water resistance, and the like, and are mature in industrial preparation and wide in commercial application. Further, PE may be high-density PE (with a density about 0.94-0.96 g/cm³) or low-density PE (with a density about 0.91-0.93 g/cm³). (2) The fluoropolymer type material may include at least one of polytetrafluoroethylene (PTFE), polyvinyl fluoride (PVF), and polyvinylidene fluoride (PVDF); the fluoropolymer type material has good polarity and dielectric constant, and when used in a battery, the above fluoropolymer type material can well improve the lyophilic property of the separator, with PVDF most widely applied. (3) The polyester type material may include at least one of polyethylene terephthalate and polyurethane. The polyester type material such as polyethylene terephthalate has good resistance to electrolytic solution corrosion, and polyurethane such as polycarbamate has good wear resistance. Therefore, the type of the substrate of the polymer base film 11 can be selected according to actual needs.

In some embodiments, the organic binder 12 in the separator may specifically include at least one of PVDF, polyacrylate, an acrylic acid, carboxymethyl cellulose, polyimide, an ethylene-vinyl acetate copolymer, polyurethane, maleic anhydride, and an ethylene-acrylic acid copolymer. A material of the organic binder 12 in the above type has good cohesiveness and can be dispersed in the material of the polymer base film 11 to form the self-adhesive separator.

In some embodiments, in the separator formed by matching the materials of the organic binder 12 and the polymer base film 12 in the above types, the organic binder 12 may have a molecular weight of 100 Da to 1,200,000 Da, and the substrate of the polymer base film 11 may have a molecular weight of 50,000 Da to 4,000,000 Da.

Da, with the full name of Dalton, is a unit commonly used for the molecular weight, and is the algebraic sum of the atomic weights of all atoms in a molecule by number. The organic binder 12 may have a molecular weight of 100 Da to 1,200,000 Da, and has good cohesiveness, and in an exemplary example, the organic binder 12 has a molecular weight, including but not limited to, 1,000 Da, 5,000 Da, 10,000 Da, 50,000 Da, 200,000 Da, 300,000 Da, 500,000 Da, 600,000 Da, 800,000 Da, 900,000 Da, 1,000,000 Da, 1,100,000 Da, 1,200,000 Da, and other typical but non-limiting molecular weights, which may be, for example, 1,000 Da to 1,000,000 Da. The substrate of the polymer base film 11 has a molecular weight of 50,000 Da to 4,000,000 Da, and has a good mechanical strength, and in an exemplary example, the substrate of the polymer base film 11 has a molecular weight including, but not limited to, 50,000 Da, 100,000 Da, 200,000 Da, 300,000 Da, 500,000 Da, 600,000 Da, 800,000 Da, 900,000 Da, 1,000,000 Da, 1,100,000 Da, 1,200,000 Da, 1,600,000 Da, 2,000,000 Da, 2,200,000 Da, 2,400,000 Da, 2,600,000 Da, 3,000,000 Da, 3,200,000 Da, 3,500,000 Da, 3,800,000 Da, 4,000,000 Da, and other typical but non-limiting molecular weights, which may be, for example, 300,000 Da to 2,000,000 Da.

In some embodiments, the organic binder 12 may have a molecular weight of 1,000 Da to 1,000,000 Da, and the substrate of the polymer base film 11 may have a molecular weight of 300,000 Da to 2,000,000 Da. The organic binder 12 with the molecular weight of 1,000 Da to 300,000 Da may be well dispersed in the polymer base film 11 with the molecular weight of 300,000 Da to 2,000,000 Da, so that the cohesiveness of the organic binder 12 can be well exerted, and meanwhile, the organic binder is not prone to fall off, which can further improve the overall heat resistance and stability of the separator.

In some embodiments, the organic binder 12 may be the same as or different from the substrate of the polymer base film 11 in the separator in type. For example, if the organic binder 12 is different from the substrate of the polymer base film 12 in type, when the organic binder 11 is dispersed in the polymer base film 12, the separator has better overall heat resistance. When the organic binder 11 is the same as apolymerization monomer of the substrate of the polymer base film 12 in type, the molecular weight of the organic binder 12 is less than that of the substrate of the polymer base film 11. Because the organic binder 12 is the same as the polymerization monomer of the substrate of the polymer base film 11 in type, the organic binder and the substrate have good compatibility, and meanwhile, the molecular weight of the organic binder 12 is less than that of the substrate of the polymer base film 11, so that the cohesiveness of the organic binder 12 and the mechanical strength of the polymer base film 11 can be maintained; a self-adhesive separator with better compatibility can be formed by matching the organic binder 12 and the substrate of the polymer base film 11, and the separator can have a good thermal pore-closing function by uniformly dispersing the organic binder 12 in the substrate 11, so that thermal runaway is reduced, which further improves the safety of the separator.

In some embodiments, the organic binder 12 is the same as thepolymerization monomer of the polymer base film 11 in type, so that the organic binder 12 with the molecular weight less than that of the substrate of the polymer base film 11 can be selected for matching. For example, by selection, the organic binder 12 may include PVDF with a molecular weight of 300,000 Da to 1,000,000 Da, and the substrate of the polymer base film 11 may include PVDF with a molecular weight of 1,000,000 Da to 2,000,000 Da; further, the organic binder 12 may include PVDF with a molecular weight of 400,000 Da to 750,000 Da, and the substrate of the polymer base film 11 may include PVDF with a molecular weight of 1,200,000 Da to 1,700,000 Da. The above PVDF with different molecular weights is matched to form the organic binder 12 and the substrate of the polymer base film 11, so that the materials in the separator have good compatibility, and therefore the thermal pore-closing performance of the separator is better, and the safety is better; meanwhile, the separator has good compressibility and is easier to compress when being assembled in a battery, so that the energy density of the battery can be further improved.

In some embodiments, a mass ratio of the polymer base film 11 to the organic binder 12 in the separator may be 10:(0.01-6). In an exemplary example, the mass ratio of the polymer base film 11 to the organic binder 12 may be, but is not limited to, 10:0.01, 10:0.05, 10:0.1, 10:0.4, 10:0.6, 10:1. 10:2. 10:3. 10:4, 10:5, and other typical but non-limiting mass ratios. According to the mass ratio of the polymer base film 11 to the organic binder 12 of 10:(0.01-6) in the embodiments of the present application, the organic binder 12 is dispersed in the polymer base film 11 to form the separator, and at the mass ratio, the separator can keep self-adhesion, and meanwhile has better heat resistance and stability.

In some embodiments, a mass ratio of the polymer base film 11 to the organic binder 12 in the separator may be 10:(0.1-5). According to the mass ratio of the polymer base film 11 to the organic binder 12 of 10:(0.1-5), the organic binder 12 in the ratio is dispersed in the polymer base film 11 to form the separator, so that the overall heat resistance, stability, and self-adhesion of the separator are improved, and therefore the comprehensive effect of improving the structural stability of the battery is good.

In some embodiments, the separator may have a thickness of 1 µm to 12 µm. In an exemplary example, the separator has a thickness including, but not limited to, 1 µm, 2 µm, 3 µm, 5 µm, 10 µm, 12 µm, and other typical but non-limiting mass thicknesses, which may be, for example, 3 µm to 6 µm. The organic binder 12 is dispersed in the polymer base film 11 to form the separator with the thickness of 1 µm to 12 µm, the separator still has good mechanical strength and meanwhile has small thermal shrinkage at the thickness due to the effect of the organic binder, and when being used in a battery, the small-thickness separator can significantly improve the energy density of the battery.

In some embodiments, the separator may have a thickness of 3 µm to 6 µm. The separator with the thickness of 3 µm to 6 µm has a good comprehensive effect of improving the mechanical strength and the energy density of a battery in the battery.

Specifically, in the embodiments of the present application, different types of organic binders 12 are selected and dispersed in different types of polymer base films 11 according to a certain mass ratio to form the above separator with the thickness of 1 µm to 12 µm, so that the separator has good thermal shrinkage and tensile strength. For example, (1) the separator may have a transverse direction (TD) thermal shrinkage of 2.0% or less at 105 °C for 1 h, and a machine direction (MD) thermal shrinkage of 2.0% or less at 105 °C for 1 h. In an exemplary example, the TD thermal shrinkage or the MD thermal shrinkage of the separator includes, but is not limited to, 0.1%, 0.5%, 0.8%, 1%, 1.2%, 1.5%, 1.8%, 2%, and other typical but non-limiting thermal shrinkage. For example, the TD thermal shrinkage and the MD thermal shrinkage may be 0.1% to 1.2% at 105 °C for 1 h. (2) The separator has a TD tensile strength of 700 kg/cm² or more and a MD tensile strength of 1000 kg/cm² or more. In an exemplary example, the separator has a TD tensile strength including, but not limited to, 700 kg/cm², 800 kg/cm², 1000 kg/cm², 1200 kg/cm², 1500 kg/cm², 2000 kg/cm², 2500 kg/cm², 3000 kg/cm², 3500 kg/cm², 4000 kg/cm², 4500 kg/cm², and other typical but non-limiting tensile strength, and the separator has a MD tensile strength including, but not limited to, 1000 kg/cm², 1200 kg/cm², 1500 kg/cm², 2000 kg/cm², 2500 kg/cm², 3000 kg/cm², 3500 kg/cm², 4000 kg/cm², 4500 kg/cm², and other typical but non-limiting tensile strength. For example, the separator has the TD tensile strength of 1000-4000 kg/cm² and the MD tensile strength of 1200-4000 kg/cm².

### Preparation Method for Separator

In a second aspect, embodiments of the present application provide a preparation method for a separator. As shown in FIG. 2, the preparation method for a separator includes the following steps:
S01: mixing an organic binder and a substrate of a polymer base film to obtain a mixture; and
S02: melt-extruding the mixture and then performing stretching treatment to obtain the separator.

By using a dry-stretching pore-forming technology, the organic binder and the substrate of the polymer base film are mixed, melt-extruded, and stretched to obtain the separator with a microporous structure. According to the preparation method for the separator in the embodiments of the present application, the organic binder is mixed into the substrate of the polymer base film from a raw material end for preparing the separator for integrated film forming to form a self-adhesive separator, so that process steps of adhering the separator to an electrode are simplified, and the preparation method for integrating the organic binder and the substrate to form the film is simple in process and low in preparation costs, and can also be used for preparing the self-adhesive separator with good heat resistance and stability, thereby improving the energy density of a battery and prolonging the cycle life of the battery.

When the separator prepared by the embodiments of the present application is used in the battery, the separator has good adhesion with the electrode, which can improve the dynamics performance of the battery.

In S01, the specific types and ratio of the organic binder and the substrate of the polymer base film are set forth in detail above. Specifically, the substrate of the polymer base film and the organic binder may be mixed at a mass ratio of 10:(1-5). The substrate of the polymer base film may include at least one of a polyolefin type material, a fluoropolymer type material, a polyester type material, polyetheretherketone, polyimide, cellulose, and a cellulose ester. The polyolefin type material may include at least one of PE and PP; the fluoropolymer type material may include at least one of PTFE, PVF, and PVDF; the polyester type material may include at least one of polyethylene terephthalate and polyurethane. The specific type of the organic binder may be the same as or different from the type of the substrate of the polymer base film. The organic binder may specifically include at least one of PVDF, polyacrylate, an acrylic acid, carboxymethyl cellulose, polyimide, an ethylene-vinyl acetate copolymer, polyurethane, maleic anhydride, and an ethylene-acrylic acid copolymer. The organic binder may have a molecular weight of 100 Da to 1,200,000 Da, and the substrate of the polymer base film may have a molecular weight of 50,000 Da to 4,000,000 Da.

In S02, in some embodiments, a temperature of the melt-extruding is 200-300 °C when the mixture is melt-extruded.

The substrate of the polymer base film may have a melting point of 130-400 °C, and different types of substrates have different melting points, such as 130 °C, 150 °C, 200 °C, 250 °C, 300 °C, and the like, which may be specifically 130-190 °C or the like; the organic binder may have a melting point of 100-200 °C, and different types of organic binders have different melting points, such as 100 °C, 120 °C, 150 °C, 180 °C, 200 °C, and the like, which may be specifically 100-150 °C or the like. In the embodiments of the present application, the mixture of the organic binder and the substrate of the polymer base film can form a viscous-state mixture which is uniformly mixed and has good fluidity by performing the melt-extruding at the temperature of 200-300 °C, so that subsequent stretching and film forming can be facilitated. In an exemplary example, the temperature for melt-extruding the mixture includes, but is not limited to, 200 °C, 220 °C, 250 °C, 260 °C, 300 °C, and other typical but non-limiting temperatures.

In some embodiments, a stretching temperature of the stretching treatment after melt-extruding the mixture is 100-120 °C.

The temperature of the melt-extruded material at 200-300 °C is lowered to 100-120 °C for the stretching treatment, and stretching at the temperature may cause a crystalline interface of the molten material to peel off, thereby forming the separator with a porous structure. In an exemplary example, the temperature of the stretching treatment includes, but is not limited to, 100 °C, 105 °C, 110 °C, 105 °C, 120 °C, and other typical but non-limiting temperatures.

In some embodiments, the stretching treatment after melt-extruding the mixture has a stretching ratio of 10-300 times.

The melt-extruded material in the viscous state is stretched at the stretching ratio of 10-300 times, so that the separator, made from a hard elastomer material, with the microporous structure can be formed. In an exemplary example, the stretching treatment has a stretching ratio including, but not limited to, 10 times, 50 times, 80 times, 100 times, 150 times, 180 times, 200 times, 250 times, 300 times, and other typical but non-limiting stretching ratios.

In some embodiments, the stretching treatment may be biaxial stretching treatment, for example, the temperature of the melt-extruded material at 200-300 °C is lowered to 100-120 °C for cooling biaxial stretching with a stretching ratio of 100-200 times, and under such conditions, the porosity of the separator can be well controlled, and pores can be uniformly distributed.

### Secondary Battery

In a third aspect, embodiments of the present application provide a battery, including a positive electrode plate, a negative electrode plate, and a separator arranged between the positive electrode plate and the negative electrode plate, where the separator is the separator according to the first aspect of the embodiments of the present application and/or the separator prepared by the preparation method according to the second aspect of the embodiments of the present application.

The separator according to the first aspect of the embodiments of the present application and/or the separator prepared by the preparation method according to the second aspect of the embodiments of the present application are used in the battery, such that the positive electrode plate and the negative electrode plate of the battery can be bound together by the separator, and therefore the space activity of the electrode plate of the battery is reduced, and a distance between positive and negative electrodes is shortened, thereby enabling the battery to have a good energy density and long cycle life based on the fact that the separator is good in overall heat resistance and stability and small in thickness.

In some embodiments, an adhesive force between the separator and the positive electrode plate or the negative electrode plate in the battery is greater than or equal to 1.0 N/m under hot-pressing conditions of 95 °C and 7 MPa for 10 s. The separator under the condition has good cohesiveness due to the adhesive strength thereof, and the adhesive force between the self-adhesive separator and the positive electrode or the negative electrode may be greater than or equal to 1 N due to the high cohesiveness of the self-adhesive separator, and therefore the structure of the battery is more stable.

In some embodiments, the battery is a secondary battery. In an exemplary example, the secondary battery may be an ion battery, a sodium-ion battery, or the like, and the secondary battery has the characteristics of a high energy density and good cycle life and may be used as a power battery or an energy storage system power source.

Typically, the secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte plays a role of conducting the ions between the positive electrode plate and the negative electrode plate. The separator is arranged between the positive electrode plate and the negative electrode plate to primarily prevent the positive and negative electrodes from short-circuiting, while allowing the ions to pass through.

In some embodiments, the positive electrode plate includes a positive electrode current collector and a positive electrode active layer bonded on the positive electrode current collector. The positive electrode active layer contains a positive electrode active material, when the secondary battery is a lithium-ion battery, the positive electrode active material is a lithium-containing material, and when the secondary battery is a sodium-ion battery, the positive electrode active material is a sodium-containing material.

In some embodiments, a current collector of the positive electrode plate is also called a positive electrode current collector, and a metal foil or a composite current collector can be used. For example, as the metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, etc.) on the polymer material substrate such as a substrate made of PP, polyethylene terephthalate, polybutylene terephthalate, polystyrene, and PE.

In some embodiments, the positive electrode active layer further optionally includes a binder. As an example, the binder may include at least one of PVDF, PTFE, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorinated acrylate resin. Further, the positive electrode active layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the negative electrode plate includes a negative electrode current collector and a positive electrode active layer bonded on the negative electrode current collector. The negative electrode active layer contains a negative electrode active material, and the negative electrode active material may be a negative electrode active material known in the art for use in a battery. As an example, the negative electrode active material may include at least one of artificial graphite, natural graphite, soft carbon, hard carbon, a silicon-based material, a tin-based material, lithium titanate, and the like.

In some embodiments, a current collector of the negative electrode plate is also called a negative electrode current collector, and a metal foil or a composite current collector can be used as the negative electrode current collector. For example, as the metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, etc.) on the polymer material substrate such as a substrate made of PP, polyethylene terephthalate, polybutylene terephthalate, polystyrene, and PE.

In some embodiments, the negative electrode active layer further optionally includes a binder. The binder may be selected from at least one of styrene butadiene rubber, a polyacrylic acid, sodium polyacrylate, polyacrylamide, polyvinyl alcohol, sodium alginate, a polymethacrylic acid, and carboxymethyl chitosan. Further, the negative electrode active layer further optionally includes a conductive agent. The conductive agent may be selected from at least one of superconducting carbon, acetylene black, carbon black, Ketjen black, a carbon dot, a carbon nanotube, graphene, and a carbon nanofiber. The negative electrode active layer further optionally includes other auxiliary agents such as a thickener (e.g., sodium carboxymethylcellulose).

The electrolyte plays a role of conducting the ions between the positive electrode plate and the negative electrode plate. The embodiments of the present application have no specific restrictions on the type of the electrolyte, which can be selected according to needs. For example, the electrolyte may be liquid, gel, or all solid. In some embodiments, the electrolyte is an electrolytic solution. The electrolytic solution includes an electrolyte salt and a solvent. For the secondary battery to be a lithium-ion battery, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium difluorobis(oxalato)phosphate, and lithium tetrafluoro(oxalato)phosphate. For the secondary battery to be a sodium-ion battery, the corresponding electrolyte salt is changed to a sodium salt.

In some embodiments, the solvent in the electrolytic solution may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery, and an additive for improving the high-temperature or low-temperature performance of the battery.

In some embodiments, the secondary battery according to the embodiments of the present application may include any one of a battery cell, a battery module, and a battery pack. The battery cell includes a battery housing and a battery core packaged in the battery housing. The present application does not particularly limit the shape of the battery cell, and it may have a cylindrical shape, a square shape, or any other shape, such as a battery cell 20 of a square structure as shown in FIG. 3.

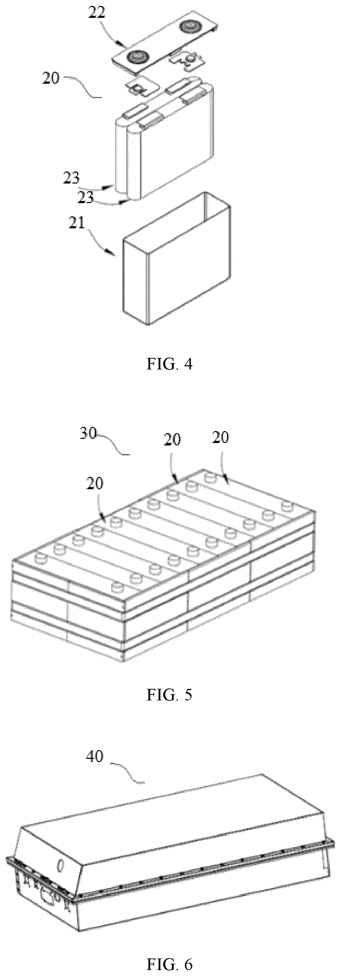

In some embodiments, as shown in FIG. 4, an outer packaging of the battery cell 20 may include a housing 21 and a top cover assembly 22. The housing 21 may include a bottom plate and side plates connected to the bottom plate, and the bottom plate and the side plates define, in an enclosing manner, an accommodating cavity. The housing 21 is provided with an opening in communication with the accommodating cavity, and the top cover assembly 22 is configured for lidding the opening to close the accommodating cavity. The positive electrode, the separator, and the negative electrode plate included in the secondary battery according to the embodiments of the present application may form an electrode assembly 23 through a winding process and/or a stacking process. The electrode assembly 23 is packaged in the accommodating cavity. The electrolytic solution is infiltrated into the electrode assembly 23. The number of electrode assemblies 23 included in the battery cell 20 may be one or more and may be adjusted as needed.

A preparation method for the battery cell 20 is well known. In some embodiments, the positive electrode, the separator, and the negative electrode plate and the electrolytic solution may be assembled to form the battery cell 20. As an example, the battery cell 20 may be obtained by subjecting the positive electrode, the separator, and the negative electrode plate to a winding process and/or a stacking process to form the electrode assembly 23, placing the electrode assembly 23 in the outer packaging, injecting the electrolytic solution into the outer packaging after drying, and subjecting the outer packaging to vacuum packaging, standing, formation, shaping, and other procedures.

The battery module is formed by assembling the battery cells 20, that is, the battery module may include a plurality of the battery cells 20, and the specific number may be adjusted according to the use and capacity of the battery module.

In some embodiments, FIG. 5 is a schematic view of a battery module 30 as an example. As shown in FIG. 5, in the battery module 30, a plurality of battery cells 20 may be sequentially arranged in a length direction of the battery module 30. Certainly, the arrangement may also be in any other manner. Further, the plurality of battery cells 20 may be fixed by fasteners.

Optionally, the battery module 30 may further include a shell having an accommodating space in which the plurality of battery cells 20 are accommodated. The battery pack is formed by assembling the above battery cells 20, that is, the battery pack may include a plurality of battery cells 20, where a plurality of the battery cells 20 may be assembled into the above battery module 30. The specific number of the battery cells 20 or battery modules 30 included in the battery pack may be adjusted according to the use and capacity of the battery pack.

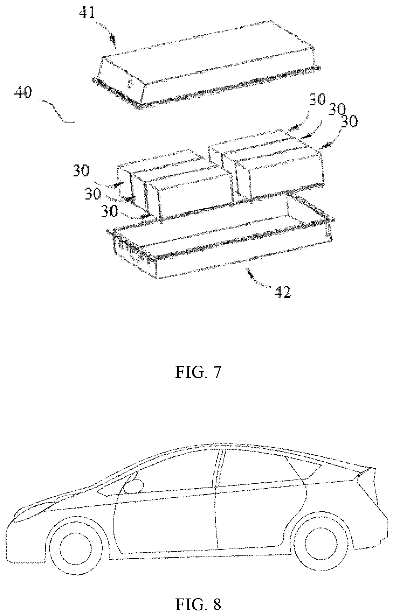

As in embodiments, FIG. 6 and FIG. 7 are schematic views of a battery pack 40 as an example. The battery pack 40 may include a battery case and a plurality of battery modules 30 arranged in the battery case. The battery case includes an upper case body 41 and a lower case body 42. The upper case body 41 is configured for lidding the lower case body 42 and forming a closed space for accommodating the battery modules 30. The plurality of battery modules 30 may be arranged in any manner in the battery case.

### Electric Device

In a fourth aspect, embodiments of the present application further provide an electric device, which includes the above battery according to the embodiments of the present application. The battery may be used as a power source for the electric device, or as an energy storage unit for the electric device. Therefore, the electric device according to the embodiments of the present application has the advantages of long standby or endurance time, good stability and good safety.

The electric device may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like. A secondary battery, a battery module, or a battery pack may be selected based on the use requirements of the electric device.

FIG. 8 is a schematic view of an electric device as an example. The electric device is a pure electric vehicle, a hybrid electric vehicle, a plug-in hybrid electric vehicle, or the like. To meet the requirements of the electric device for high power and high energy density of the battery, the battery pack or the battery module may be used. As another example, the electric device may be a mobile phone, a tablet computer, a notebook computer, or the like. The electric device is generally required to be light and thin, and a secondary battery can thus be used as a power source.

### Examples

Hereinafter, examples of the present application are described. The examples described below are illustrative and are merely used to explain the present application, and they should not be construed as limiting the present application. The embodiments without techniques or conditions specified therein are implemented according to techniques or conditions described in the literature in the art or according to product instructions. Reagents or instruments used herein without specified manufacturers are all commercially available conventional products.

### 1. Examples of Separator and Preparation Method Therefor

### Example A1

Provided is a separator, including a polymer base film and an organic binder dispersed in the polymer base film, where the organic binder is PVDF with a molecular weight of 500,000 Da, a substrate of the polymer base film is PP with a molecular weight of 330,000 Da, and a mass ratio of the polymer base film to the organic binder is 10:1.

A preparation method for the separator includes the following steps:
S11: mixing the substrate and the organic binder in the mass ratio of 10:1 to obtain a mixture; and
S12: melt-extruding the mixture at 210 °C, and then performing stretching treatment at 120 °C at a stretching ratio of 200 times to obtain the separator with a thickness of 5 µm.

### Example A2

Provided is a separator, including a polymer base film and an organic binder dispersed in the polymer base film, where the organic binder is PVDF with a molecular weight of 500,000 Da, a substrate of the polymer base film is PP with a molecular weight of 330,000 Da, and a mass ratio of the polymer base film to the organic binder is 10:1.

A preparation method for the separator includes the following steps:
S11: mixing the substrate and the organic binder in the mass ratio of 10:1 to obtain a mixture; and
S12: melt-extruding the mixture at 210 °C, and then performing stretching treatment at 120 °C at a stretching ratio of 500 times to obtain the separator with a thickness of 1 µm.

### Example A3

Provided is a separator, including a polymer base film and an organic binder dispersed in the polymer base film, where the organic binder is PVDF with a molecular weight of 500,000 Da, a substrate of the polymer base film is PP with a molecular weight of 330,000 Da, and a mass ratio of the polymer base film to the organic binder is 10:1.

A preparation method for the separator includes the following steps:
S11: mixing the substrate and the organic binder in the mass ratio of 10:1 to obtain a mixture; and
S12: melt-extruding the mixture at 210 °C, and then performing stretching treatment at 120 °C at a stretching ratio of 80 times to obtain the separator with a thickness of 12 µm.

### Example A4

Provided is a separator, including a polymer base film and an organic binder dispersed in the polymer base film, where the organic binder is PVDF with a molecular weight of 500,000 Da, a substrate of the polymer base film is PP with a molecular weight of 330,000 Da, and a mass ratio of the polymer base film to the organic binder is 10:5.

A preparation method for the separator includes the following steps:
S21: mixing the substrate and the organic binder in the mass ratio of 10:5 to obtain a mixture; and
S22: melt-extruding the mixture at 210 °C, and then performing stretching treatment at 120 °C at a stretching ratio of 200 times to obtain the separator with a thickness of 5 µm.

### Example A5

Provided is a separator, including a polymer base film and an organic binder dispersed in the polymer base film, where the organic binder is PVDF with a molecular weight of 600,000 Da, a substrate of the polymer base film is PP with a molecular weight of 330,000 Da, and a mass ratio of the polymer base film to the organic binder is 10:1.

A preparation method for the separator includes the following steps:
S11: mixing the substrate and the organic binder in the mass ratio of 10:1 to obtain a mixture; and
S12: melt-extruding the mixture at 210 °C, and then performing stretching treatment at 120 °C at a stretching ratio of 200 times to obtain the separator with a thickness of 5 µm.

### Example A6

Provided is a separator, including a polymer base film and an organic binder dispersed in the polymer base film, where the organic binder is carboxymethyl cellulose with a molecular weight of 10,000 Da, a substrate of the polymer base film is PP with a molecular weight of 330,000 Da, and a mass ratio of the polymer base film to the organic binder is 10:1.

A preparation method for the separator includes the following steps:
S11: mixing the substrate and the organic binder in the mass ratio of 10:1 to obtain a mixture; and
S12: melt-extruding the mixture at 210 °C, and then performing stretching treatment at 120 °C at a stretching ratio of 200 times to obtain the separator with a thickness of 5 µm.

### Example A7

Provided is a separator, including a polymer base film and an organic binder dispersed in the polymer base film, where the organic binder is PVDF with a molecular weight of 500,000 Da, a substrate of the polymer base film is PVDF with a molecular weight of 1,200,000 Da, and a mass ratio of the polymer base film to the organic binder is 10:1.

A preparation method for the separator includes the following steps:
S11: mixing the substrate and the organic binder in the mass ratio of 10:1 to obtain a mixture; and
S12: melt-extruding the mixture at 210 °C, and then performing stretching treatment at 120 °C at a stretching ratio of 200 times to obtain the separator with a thickness of 5 µm.

### Comparative Example A1

Provided is a separator, including a polymer base film and an organic binder layer sprayed on a surface of the polymer base film, where the polymer base film has a thickness of 5 µm, and the organic binder layer has a thickness of 2 µm. A substrate of the polymer base film is PP with a molecular weight of 330,000 Da, a binder of the organic binder layer is PVDF with a molecular weight of 500,000 Da, and a mass ratio of the polymer base film to the organic binder layer is 10:1.

### Comparative Example A2

Provided is a separator, including a polymer base film and an organic binder layer sprayed on a surface of the polymer base film, where the polymer base film has a thickness of 5 µm, and the organic binder layer has a thickness of 2 µm. A substrate of the polymer base film is PP with a molecular weight of 330,000 Da, a binder of the organic binder layer is PVDF with a molecular weight of 500,000 Da, and a mass ratio of the polymer base film to the organic binder layer is 10:5.

### Comparative Example A3

Provided is a separator, including a polymer base film and an organic binder layer sprayed on a surface of the polymer base film, where the polymer base film has a thickness of 5 µm, and the organic binder layer has a thickness of 2 µm. A substrate of the polymer base film is PP with a molecular weight of 330,000 Da, a binder of the organic binder layer is PVDF with a molecular weight of 600,000 Da, and a mass ratio of the polymer base film to the organic binder layer is 10:1.

### Comparative Example A4

Provided is a separator, including a polymer base film and an organic binder layer sprayed on a surface of the polymer base film, where the polymer base film has a thickness of 5 µm, and the organic binder layer has a thickness of 2 µm. A substrate of the polymer base film is PVDF with a molecular weight of 1,200,000 Da, a binder of the organic binder layer is PVDF with a molecular weight of 500,000 Da, and a mass ratio of the polymer base film to the organic binder layer is 10:1.

### 2. Examples of Secondary Battery Cell

### Example B1

Provided is a secondary battery cell, including a battery core formed by a positive electrode plate, a separator, and a negative electrode plate, and further includes an electrolytic solution. The separator is the separator according to Example A1. A preparation method for the secondary battery cell includes:

Preparation of the positive electrode plate: N-methylpyrrolidone (NMP) was used as a solvent, and LiNi_{0.8}Co_{0.1}Mn_{0.1}O₂, carbon nanotubes (CNT), and a binder (PVDF) were mixed in a mass ratio of 97:2:1 to prepare a positive electrode slurry with a solid content of 80%; and an aluminum foil was uniformly coated with the positive electrode slurry, with double-sided coating performed, and after full drying, cold pressing, and slitting, the positive electrode plate was obtained as a positive electrode.

Preparation of the negative electrode plate: water was used as a solvent, and artificial graphite, conductive agent SP, a dispersing agent (CMC), and a binder (SBR) were mixed in a mass ratio of 96:1:1:2 to prepare a negative electrode slurry with a solid content of 58%; and an aluminum foil was uniformly coated with the positive electrode slurry, with double-sided coating performed, and after full drying, cold pressing, and slitting, the negative electrode plate was obtained as a negative electrode.

Electrolytic solution: ethylene carbonate (EC)/diethyl carbonate (DEC) were mixed at a room temperature according to a volume ratio of 1:1, and LiPF₆ was added into a mixed solution to obtain a solution with a concentration of 1 mol/L as the electrolytic solution.

Assembling of the secondary battery: the positive electrode plate and the negative electrode plate prepared as above were stacked and wound in the order of "positive electrode-separator-negative electrode" in a low-humidity constant-temperature room to form a bare battery core, and then the electrolytic solution was injected to assemble a lithium-ion secondary battery.

Example B1 to Example B7 and Comparative Example B1 to Comparative Example B4

This Example B1 to Example B7 and Comparative Example B1 to Comparative Example B4 respectively provide a secondary battery cell, where each secondary battery cell includes a battery core formed by a positive electrode plate, a separator, and a negative electrode plate, and further includes an electrolytic solution. The separators in Example B1 to Example B7 and Comparative Example B1 to Comparative Example B4 correspond to the separators in Example A1 to Example A7 and Comparative Example A1 to Comparative Example A4, respectively. The separator in Example A1 is the separator in the battery core of Example B1 of the secondary battery, the separator in Example A2 is the separator in the battery core of Example B2 of the secondary battery, and so on, and the separator in Comparative Example A4 is the separator in the battery core of Comparative Example B4 of the battery.

### Performance Testing

The separators and the secondary battery cells in the above examples and comparative examples were separately tested.
1. Method for testing the adhesive force of the separator to the electrode plate:

Preparation of a sample: the separator was placed on the positive/negative electrode plate, pressed at 60/75/95 °C for 30 s at a pressure of 7 tons and taken out to form a test sample.

Testing: the test sample was firmly bound to a test metal fixture, the separator was peeled from the electrode plate at 180 degrees, and force value data was recorded as the adhesive force with the electrode plate.

2. Method for testing the puncture strength of the separator:
The separator was cut into strips by a utility knife, where the width of the strip-shaped separator had to be greater than 100 mm. Test pieces with the width of 100 mm were mounted on a sample film fixing clamp ring, then a steel needle with a diameter of 1.0 mm and a radius of the tip of the diameter of 0.5 mm was used for thrusting the test pieces at a speed of (50±5) mm/min, and the maximum load of the steel needle penetrating the test pieces was read. The test generally measured three points, an arithmetic mean value thereof was taken, and the number of the test pieces was five or more. The puncture strength of the separator was on the basis of the standard: GB/T 10004-2008.

3. Method for testing the air permeability, tensile strength, etc. of the separator:
The air permeability, the transverse direction (MD) tensile strength, and the machine direction (TD) tensile strength of the separator have the meaning known in the art, and can be tested based on the standard GB/T 36363-2018 known in the art.

4. Method for testing the thermal shrinkage of the separator:
Sample preparation: the separator prepared above was punched out into samples with a width of 50 mm and a length of 100 mm by a punch, five parallel samples were taken and placed on an A4 paper and fixed, and then the A4 paper with the samples was placed on a corrugated paper with a thickness of 1 mm to 5 mm.

Sample testing: the A4 paper placed on the corrugated paper was placed into a blowing-type oven, a temperature of the blowing-type oven was set to be 250 °C, timing was started after the temperature reached the set temperature and was stabilized for 30 min, the length and the width of the separator were measured after set time (1 h in the present application) was reached, and numerical values were respectively marked as a and b. Calculation of the thermal shrinkage: the machine direction (MD) thermal shrinkage = [(100-a)/100] × 100%, the transverse direction (TD) thermal shrinkage = [(50-b)/50] × 100%, and the average of the five parallel samples was taken as the test result.

5. Method for testing the porosity of the separator: a mercury injection apparatus is used for testing with reference to GB/T 21650.1-2008.

The test results of the separator are as shown in Table 1.

**Table 1**

| Embodiments | Adhesive force (N/m) to the electrode plate | Puncture strength/gf | Tensile Strength (kgf/cm²) | Thermal shrinkage (%) | Air permeability/ sec/100 cc | Porosity/% |
|---|---|---|---|---|---|---|
| Example A1 | 7.1 | 300 | MD: 2700 | 0.5 | 134 | 32 |
| | | | TD: 2842 | | | |
| Example A2 | 6.2 | 272 | MD: 2400 | 1.1 | 115 | 33 |
| | | | TD: 2631 | | | |
| Example A3 | 6.5 | 351 | MD: 3400 | 0.7 | 173 | 34 |
| | | | TD: 3600 | | | |
| Example A4 | 10.1 | 320 | MD: 2300 | 0.2 | 165 | 32 |
| | | | TD: 2432 | | | |
| Example A5 | 7.4 | 327 | MD: 2711 | 0.4 | 140 | 34 |
| | | | TD: 2843 | | | |
| Example A6 | 5.2 | 271 | MD: 2547 | 1.0 | 132 | 31 |
| | | | TD: 2612 | | | |
| Example A7 | 10.5 | 372 | MD: 3100 | 0.12 | 141 | 34 |
| | | | TD: 3200 | | | |
| Comparative Example A1 | 2.1 | 230 | MD: 2300 | 2.7 | 253 | 32 |
| | | | TD: 2100 | | | |
| Comparative Example A2 | 3.3 | 227 | MD: 2300 | 2.3 | 279 | 33 |
| | | | TD: 2231 | | | |
| Comparative Example A3 | 2.5 | 231 | MD: 2407 | 2.6 | 260 | 33 |
| | | | TD: 2237 | | | |
| Comparative Example A4 | 3.5 | 233 | MD: 2500 | 2.1 | 262 | 32 |
| | | | TD: 2400 | | | |

As can be seen from the test results in Table 1:

The separators in Examples A1-A7 of the present application have a higher adhesive force to the electrode plate, puncture strength, and thermal shrinkage than all the separators in Comparative Examples A1-A4, and have better air permeability. Meanwhile, Examples A1, A4, A5, and A7 are respectively compared with Comparative Examples A1-A4 with the surface spraying manner in turn, and under the same other conditions, the TD tensile strength and the MD tensile strength of the examples of the present application are higher than those of the comparative examples with the spraying bonding manner. Therefore, the self-adhesive separator according to the examples of the present application has better adhesion, mechanical strength, and thermal stability, and meanwhile has a small influence on the porosity of the base film. In addition, in Example A7 of the present application, the PVDF with different molecular weights is used as the binder and the substrate, so that the effects of the adhesion, mechanical strength, and thermal stability thereof are optimal.

6. Method for testing the cycle life of the secondary battery cell:
At 25 °C, the secondary batteries prepared in the examples and comparative examples were subjected to constant current charging at a rate of 1C to a charge cut-off voltage V1, followed by constant voltage charging to a current of ≤ 0.05C, left to stand for 5 min, then subjected to constant current discharging at a rate of 0.33C to a discharge cut-off voltage V2, and left to stand for 5 min, which is a charge-discharge cycle. The battery was subjected to a charge-discharge cycle test using this method until the capacity of the battery declined to 80%. The number of cycles at this time was the cycle life of the battery at 25 °C.

7. Method for testing the energy density of the secondary battery cell:
At 25 °C, the secondary batteries prepared in the examples and the comparative examples were subjected to constant current charging at a rate of 1C to a charging cut-off voltage V1, followed by constant voltage charging to a current of ≤ 0.05C, and left to stand for 5 min, the battery capacity was tested, and the energy density of the battery was calculated by multiplying the battery capacity by the voltage/battery core weight at this time.

The test results of the secondary battery are as shown in Table 2.

**Table 2**

| Embodiments | Cycle life (Cycle) | Energy density (Wh/kg) |
|---|---|---|
| Example B1 | 2500 | 230 |
| Example B2 | 2300 | 272 |
| Example B3 | 2712 | 200 |
| Example B4 | 2629 | 242 |
| Example B5 | 2513 | 247 |
| Example B6 | 2621 | 220 |
| Example B7 | 2655 | 250 |
| Comparative Example B1 | 1900 | 170 |
| Comparative Example B2 | 2100 | 162 |
| Comparative Example B3 | 1920 | 165 |
| Comparative Example B4 | 1950 | 167 |

As can be seen from the test results in Table 2:

The secondary batteries in Examples B1-B7 of the present application use the separator specific to the present application, and exhibit better energy density and cycle life than the comparative examples. Under the same other conditions, the greater the thickness of the separator of the secondary battery in Example B3, the better the cycle life of the battery, and the less the thickness of the separator of the secondary battery in Example B2, the better the energy density of the battery. Under the condition of the same thickness, the separator of the secondary battery in Example B7 uses PVDF with different molecular weights as the binder and the substrate, and exhibits the optimal effect of the energy density and cycle life.

Finally, it should be noted that the above embodiments are only used to illustrate the technical solutions of the present application, rather than limit same. Although the present application has been described in detail with reference to the foregoing embodiments, those of ordinary skill in the art will appreciate that modifications can still be made to the technical solutions recorded in the foregoing embodiments, or equivalent substitutions can still be made to some or all of the technical features. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A separator, comprising a polymer base film and an organic binder dispersed in the polymer base film, wherein molecular chain ends of a part of the organic binder are exposed on a surface of the polymer base film.

2. The separator according to claim 1, wherein a substrate of the polymer base film comprises at least one of a polyolefin type material, a fluoropolymer type material, a polyester type material, polyetheretherketone, polyimide, cellulose, and a cellulose ester.

3. The separator according to claim 2, wherein the polyolefin type material comprises at least one of polyethylene and polypropylene; alternatively,
the fluoropolymer type material comprises at least one of polytetrafluoroethylene, polyvinyl fluoride, and polyvinylidene fluoride; alternatively,
the polyester type material comprises at least one of polyethylene terephthalate and polyurethane.

4. The separator according to any one of claims 1-3, wherein the organic binder comprises at least one of polyvinylidene fluoride, polyacrylate, an acrylic acid, carboxymethyl cellulose, polyimide, an ethylene-vinyl acetate copolymer, polyurethane, maleic anhydride, and an ethylene-acrylic acid copolymer.

5. The separator according to any one of claims 1-4, wherein the organic binder has a molecular weight of 100 Da to 1,200,000 Da, and the substrate of the polymer base film has a molecular weight of 50,000 Da to 4,000,000 Da.

6. The separator according to claim 5, wherein the organic binder has the molecular weight of 1,000 Da to 1,000,000 Da, and the substrate of the polymer base film has the molecular weight of 300,000 Da to 2,000,000 Da.

7. The separator according to any one of claims 1-6, wherein the organic binder is different from the substrate of the polymer base film in type; alternatively,
the organic binder is the same as a polymerization monomer of the polymer base film, and the molecular weight of the organic binder is less than the molecular weight of the substrate of the polymer base film.

8. The separator according to claim 7, wherein the organic binder is the same as the polymerization monomer of the polymer base film, the organic binder comprises polyvinylidene fluoride with a molecular weight of 300,000 Da to 1,000,000 Da, and the substrate of the polymer base film comprises polyvinylidene fluoride with a molecular weight of 1,000,000 Da to 2,000,000 Da.

9. The separator according to claim 8, wherein the organic binder comprises polyvinylidene fluoride with a molecular weight of 400,000 Da to 750,000 Da, and the substrate of the polymer base film comprises polyvinylidene fluoride with a molecular weight of 1,200,000 Da to 1,700,000 Da.

10. The separator according to any one of claims 1-9, wherein a mass ratio of the polymer base film to the organic binder is 10:(0.01-6).

11. The separator according to claim 10, wherein the mass ratio of the polymer base film to the organic binder is 10:(0.1-5).

12. The separator according to any one of claims 1-11, wherein the separator has a thickness of 1 µm to 12 µm.

13. The separator according to claim 12, wherein the separator has a thickness of 3 µm to 6 µm.

14. A preparation method for the separator according to any one of claims 1-13, comprising the following steps:
mixing the organic binder and the substrate of the polymer base film to obtain a mixture; and
melt-extruding the mixture, and then performing stretching treatment to obtain the separator.

15. The preparation method according to claim 14, wherein a temperature of the melt-extruding is 200-300 °C.

16. The preparation method according to claim 14 or 15, wherein a temperature of the stretching treatment is 100-120 °C.

17. The preparation method according to any one of claims 14-16, wherein the stretching treatment has a stretching ratio of 10-300 times.

18. The preparation method according to claim 17, wherein the stretching treatment comprises biaxial stretching with a stretching ratio of 100-200 times.

19. A battery, comprising a positive electrode plate, a negative electrode plate, and a separator arranged between the positive electrode plate and the negative electrode plate, wherein the separator is the separator according to any one of claims 1-13 or the separator prepared by the preparation method according to any one of claims 14-18.

20. The battery according to claim 19, wherein an adhesive force between the separator and the positive electrode plate or the negative electrode plate is greater than or equal to 1.0 N/m under hot-pressing conditions of 95 °C and 7 MPa for 10 s.

21. The battery according to claim 19 or 20, wherein the battery is a secondary battery.

22. An electric device, wherein the electric device comprises the battery according to any one of claims 19-21.
